(19) Europäisches Patentamt
European Patent Office
Office européen des brevets

(11) **EP 3 056 778 B1**

(12) **EUROPEAN PATENT SPECIFICATION**

(45) Date of publication and mention
of the grant of the patent:
**08.05.2019 Bulletin 2019/19**

(51) Int Cl.:
**F16K 31/04** *(2006.01)*   **F25B 41/06** *(2006.01)*

(21) Application number: **16154084.4**

(22) Date of filing: **03.02.2016**

(54) **MOTOR OPERATED VALVE**

MOTORBETRIEBENES VENTIL

VANNE MOTORISÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.02.2015 JP 2015027339**

(43) Date of publication of application:
**17.08.2016 Bulletin 2016/33**

(73) Proprietor: **TGK CO., Ltd.
Tokyo 193-0942 (JP)**

(72) Inventors:
• **Takahashi, Kazushi
Tokyo, 193-0942 (JP)**
• **Yuasa, Tomohiro
Japan, 193-0942 (JP)**
• **Ooe, Yuto
Japan, 193-0942 (JP)**

(74) Representative: **Schröer, Gernot H.
Meissner Bolte Patentanwälte
Rechtsanwälte Partnerschaft mbB
Bankgasse 3
90402 Nürnberg (DE)**

(56) References cited:
**EP-A2- 2 211 077       WO-A1-2006/064865
US-A1- 2010 275 865    US-A1- 2014 291 562**

## Description

The present invention relates to a motor driven valve.

A refrigeration cycle in an automotive air conditioner generally includes a compressor for compressing circulating refrigerant, a condenser for condensing the compressed refrigerant, an expansion valve for throttling and expanding the condensed liquid refrigerant and delivering the resulting spray of gas-liquid mixture refrigerant, and an evaporator for evaporating the misty refrigerant and cooling the air in a vehicle interior by evaporative latent heat. For the expansion valves, mechanical expansion valves have been widely used. Such a mechanical expansion valve senses the temperature and the pressure of refrigerant at an outlet side of the evaporator and autonomously opens and closes a valve section thereof. Alternatively, motor operated expansion valves have also been increasingly used with the recent widespread use of electric vehicles and hybrid vehicles. Motor operated expansion valves achieve accurate control of the valve opening degree by means of stepping motors as drive units.

Such a motor operated expansion valve includes a needle-like valve element, for example, for opening and closing a valve hole of a small diameter formed in a body thereof, and a motion converting mechanism configured to convert rotational movement of a rotor into translational movement of a shaft to drive the valve element (refer to Japanese Patent Application Publication No. 2014-196810 or to EP-A-2 211 077, for example). The motion converting mechanism is constituted by a screw mechanism provided between the body and the shaft, for example. When the shaft rotates with the rotor, the shaft is driven in the axial direction by the screw mechanism. The valve element is supported by an end of the shaft, and opens and closes a valve section by leaving and touching a valve seat formed at an open end of the valve hole. The valve element is elastically supported by the shaft in a relatively displaceable manner so that high valve element seating characteristics can be achieved.

Specifically, the shaft has a hollow end portion, and the valve element is partially inserted in the hollow end portion and slidably supported thereby. A spring for biasing the valve element in a valve closing direction, that is, in a direction in which the valve element is made to protrude from the shaft is disposed in the hollow space inside the shaft. When the valve element touches the valve seat, the spring elastically deforms and the elastic reaction force thereof presses the valve element against the valve seat, which produces high valve element seating characteristics. Furthermore, since the valve element is elastically supported in this manner, the shaft can be stopped after the valve element touches the valve seat, which can absorb allowances of parts connected to the valve element and errors in assembly of parts. Since the shaft has, at its leading end, a support part capable of stopping a base end of the valve element, the valve element does not drop off from the shaft.

With such a structure, the valve element and the shaft basically rotate and perform translational movement integrally. When the valve element starts touching the valve seat, however, the valve element is subjected to a frictional force from the valve seat, and the valve element and the shaft are thus displaced relative to each other while the spring is elastically deformed during valve closure. As a result of the relative displacement, the spring is twisted and the twisting force acts on the valve element. The valve element may then lose its posture after touching the valve seat. Thus, in the structure of JP 2014-196810 A, a spherical spring support (ball) is disposed between the valve element and the spring. As a result, even if the spring is twisted, the twisting force is released by the rotation of the ball and is less likely to be transmitted to the valve element, which can achieve a stable valve closed state.

Related Art List

(1) Japanese Patent Application Publication No. 2014-196810

Verification conducted by the inventors, however, has shown that, with the aforementioned structure, the ball has a high degree of freedom, its center is thus likely to be deviated from the axis of the valve element, and the valve element is likely to precess. It has also been shown that this makes uneven abrasion of the valve seat due to local friction of the valve element. Such uneven abrasion of the valve seat may result in distortion of the cross-sectional shape of the valve hole and change the flow rate characteristics initially set for the motor operated valve.

Such problems do not occur exclusively in the motor operated expansion valve described above but may also occur similarly in a motor operated valve in which a valve element is elastically supported by a shaft and rotational movement of a rotor is converted into translational movement of the shaft to drive the valve element.

One purpose of the present invention is to prevent or reduce change in the flow rate characteristics in a motor driven valve.

The present invention relates to a motor operated valve as defined in claim 1. Preferred embodiments of the valve are defined in the dependent claims. The motor operated valve includes: a body having an inlet port through which fluid is introduced from an upstream side, an outlet port through which fluid is delivered to a downstream side, and a valve hole through which the inlet port and the outlet port communicate with each other; a valve element configured to open and close a valve section by moving away from and toward a valve seat formed at an open end of the valve hole; a motor including a rotor for driving the valve element in opening and closing directions of the valve section; a shaft configured to rotate with the rotor, the shaft having a hollow part open at a leading end thereof and slidably supporting the valve element in an axial direction thereof, the valve element being partially inserted in the hollow space; a spring disposed in the hollow space, the spring being configured to bias the valve element in a direction in which the valve element protrudes through a leading end opening of the shaft; a spring holder disposed in the hollow space and between the spring and the valve element, the spring holder receiving the spring at one end thereof and coming in contact with an end of the valve element at the other end thereof; and a motion converting mechanism configured to convert rotational movement of the rotor into translational movement of the shaft in the axial direction thereof.

Surfaces of the valve element and the spring holder coming in contact with each other are spherical surfaces, one of which being a convex spherical surface while the other of which being a concave spherical surface having a larger radius of curvature than the convex spherical surface. A center of the spherical surface of the valve element is located on an axis of the valve element.

In this embodiment, since the contact surfaces of the valve element and the spring holder are spherical surfaces, the axes of the valve element and the spring holder are less likely to be misaligned. Furthermore, since one of the contact surfaces of the valve element and the spring holder is a convex spherical surface while the other thereof is a concave spherical surface having a larger radius of curvature than the convex spherical surface, structural restraints of spherical shapes on each other can be reduced and the valve element can be made to have a moderate alignment function. As a result, change in the flow rate characteristics due to abrasion of the valve seat can be prevented or reduced.

FIG. 1 is a cross sectional view illustrating a structure of a motor operated valve according to an embodiment;
FIG. 2 is a cross-sectional view along arrows A-A in FIG. 1A;
FIG. 3 is an exploded perspective view illustrating components of a rotor and an actuating rod;
FIGS. 4A to 4G illustrate details of structures of a valve element and a spring holder;
FIG. 5 is a cross-sectional view illustrating operation of a control valve;
FIG. 6 is a partially enlarged view of a support structure of the valve element and the spring holder;
FIGS. 7A and 7B are explanatory diagrams illustrating a state in which the valve element and the spring holder are in contact with each other;
FIG. 8 is a graph showing the relation of a radius ratio, a maximum contact stress, and a contact interface radius of a convex spherical surface and a concave spherical surface;

FIGS. 9A and 9B are graphs showing effects of the embodiment;
FIGS. 10A to 10G are schematic views illustrating an alignment function of a valve element according to a comparative example;
FIGS. 11A to 11C are diagrams illustrating effects of contact between spherical surfaces;
FIGS. 12A and 12B illustrate main parts of a motor operated valve according to a modification; and
FIG. 13 illustrates a main part of a motor operated valve according to another modification.

The invention will now be described by reference to the preferred embodiments. This does not intend to limit the scope of the present invention, but to exemplify the invention.

Embodiments of the present invention will now be described in detail with reference to the accompanying drawings. In the following description, for convenience of description, the positional relationship in each structure may be expressed with reference to how each structure is depicted in the drawings.

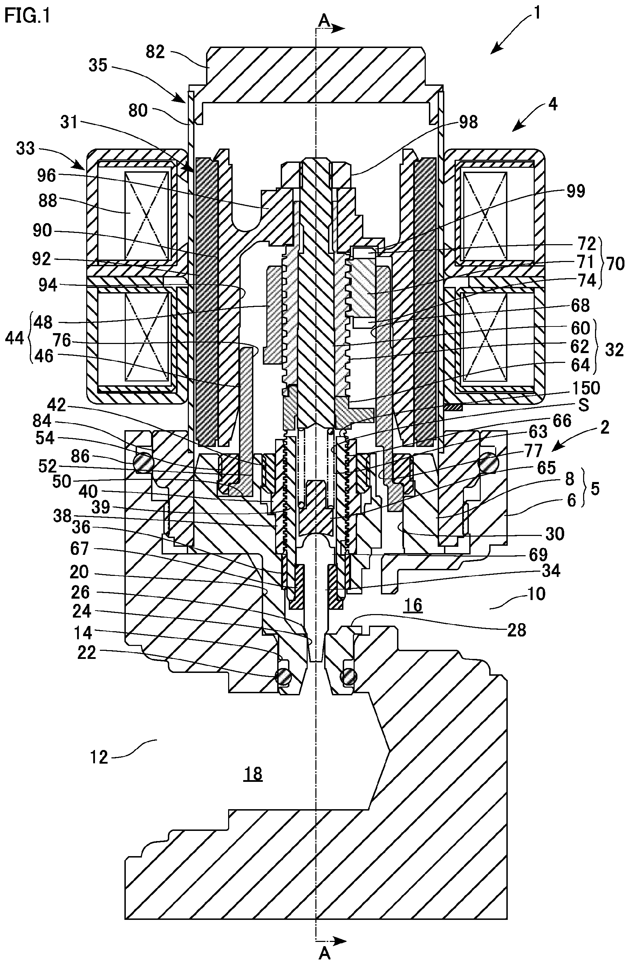

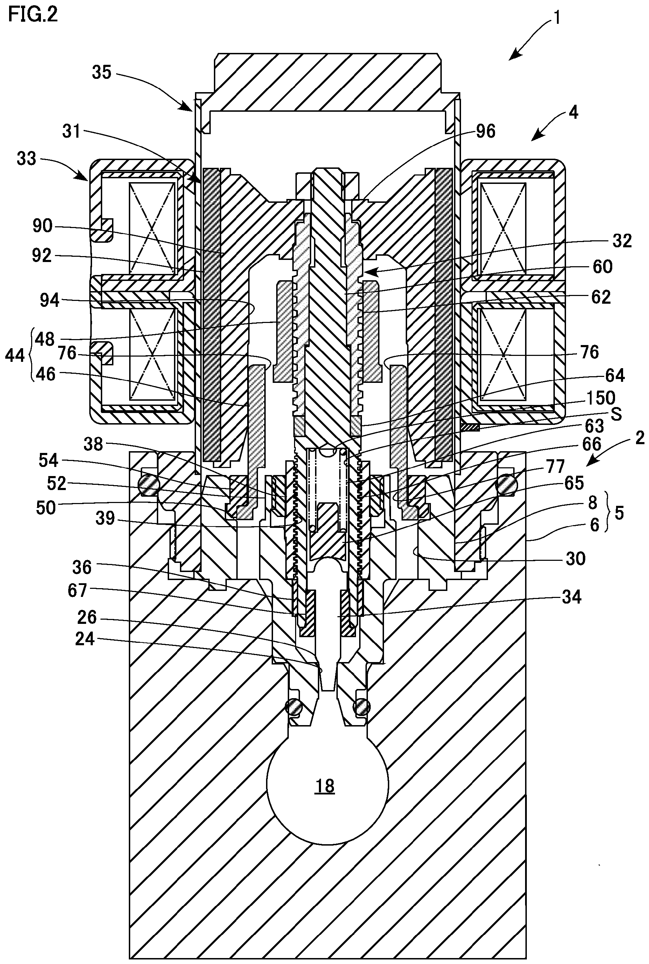

FIG. 1 is a cross sectional view illustrating a structure of a motor operated valve according to an embodiment. FIG. 2 is a cross-sectional view along arrows A-A in FIG. 1. The motor operated valve of the present embodiment is embodied as a motor operated expansion vale applicable to a refrigeration cycle in an automotive air conditioner. The refrigeration cycle includes a compressor for compressing circulating refrigerant circulating, a condenser for condensing the compressed refrigerant, an expansion valve for throttling and expanding the condensed liquid refrigerant and delivering the resulting spray of gas-liquid mixture refrigerant, and an evaporator for evaporating the misty refrigerant and cooling the air in a vehicle interior by evaporative latent heat. The refrigerant circulating through the refrigeration cycle contains lubricating oil (refrigerating machine oil) to adequately lubricate sliding parts of respective devices disposed in a circulation path. For convenience of description, the structure of the expansion valve, which is a main component, will mainly be described below and detailed description of the other components will be omitted.

As illustrated in FIG. 1, the expansion valve 1 is a stepping motor driven expansion valve formed by assembly of a valve body 2 and a motor unit 4. The valve body 2 has a body 5 containing a valve section. The motor unit 4 is mounted in such a manner as to close an upper end opening of the body 5. The body 5 includes a prismatic first body 6 and a second body 8 having a stepped cylindrical shape mounted in an upper half part of the first body 6. The first body 6 is made of an aluminum alloy, and the second body 8 is made of a copper alloy. In a modification, the second body 8 may be made of stainless steel (hereinafter referred to as "SUS").

An inlet port 10 through which refrigerant is introduced from the upstream side is formed in an upper part of one lateral surface of the first body 6, and an outlet port 12 through which refrigerant is delivered to the downstream side is formed in a lower part of the opposite lateral surface. A vertical connection passage 14 is formed in the middle of the first body 6, a passage 16 upstream thereof communicates with the inlet port 10, and a passage 18 downstream thereof communicates with the outlet port 12. The first body 6 has, in the upper half part thereof, a mounting hole 20 having a stepped circular hole shape, the diameter of which increases in a stepwise manner from the bottom to the top. The connection passage 14 constitutes part of the mounting hole 20.

The second body 8 has a stepped cylindrical shape whose outer diameter and inner diameter decrease in a stepwise manner from the top to the bottom, and an external shape complementary to the shape of the mounting hole 20. The second body 8 is mounted in such a manner as to be fitted into the mounting hole 20 from above the first body 6. An O-ring 22 for sealing is disposed between the first body 6 and the second body 8 at a position of the connection passage 14.

A valve hole 24 is formed in a lower end portion of the second body 8, and a valve seat 26 is formed at an upper end opening of the valve hole 24. A communicating hole 28 connecting the inside and the outside of the second body 8 is formed through the surface of the second body 8 facing the inlet port 10. The valve hole 24 communicates with the upstream passage 16 through the communicating hole 28. In addition, a communicating passage 30 extending vertically through the second body 8 is formed outside of the communicating hole 28, so that refrigerant in the upstream passage 16 can also be introduced into the motor unit 4.

An actuating rod 32 (main shaft) extending from a rotor 31 of the motor unit 4 coaxially therewith is inserted inside the second body 8. The actuating rod 32 supports a needle-like valve element 34 at an end portion (lower end portion) thereof. The valve element 34 touches and leaves the valve seat 26 from the upstream side to close and open the valve section.

A cylindrical sliding bearing 36 is press-fitted in a middle portion in the axial direction of the second body 8, and a cylindrical guide member 38 (functioning as a "cylindrical member") is press-fitted in a portion immediately above the middle portion. In the present embodiment, a plastic bearing reinforced with a cylindrical metal mesh core is used as the sliding bearing 36. The sliding bearing 36 is an oilless bearing (self-lubricating bearing) using polytetrafluoroethylene (hereinafter referred to as "PTFE") as a plastic material. The sliding bearing 36 is subjected to sizing, which improves the dimensional accuracy of the inner diameter and the coaxiality with the second body 8. This development enables the sliding bearing 36 to maintain low friction and high abrasion resistance, and also to increase the load bearing capacity. In a modification, a steel plate may be used as the core instead of metal mesh.

An internal thread 39 (functioning as an "internal threaded portion") is formed on an inner surface of the guide member 38. The guide member 38 is produced by forming the internal thread 39 through cutting on an inner surface of a tubular material made of SUS. In the present embodiment, the internal thread 39 is constituted by a trapezoidal thread with high thrust and excellent abrasion resistance. In a modification, the internal thread 39 may be constituted by a triangular thread. A flange part 40 protruding radially outward is formed at the middle in the axial direction of the guide member 38. The bottom surface of the flange part 40 is stopped by a stepped portion of the second body 8, so that the amount by which the guide member 38 is press-fitted to the second body 8 is controlled. More specifically, the guide member 38 is lightly press-fitted into the second body 8, and fixed in such a manner that the guide member 38 is pressed from above by a ring thread 42 with a small diameter screwed in an upper end of the second body 8. In a modification, the guide member 38 may be fixed in the second body 8 only by press-fitting.

As also illustrated in FIG. 2, a rack guide 44 (functioning as a "guide member") is disposed upright on a top surface of the second body 8. The rack guide 44 has a lower half part constituting a large diameter part 46, an upper half part constituting a small diameter part 48, and a lower end portion fixed to the top surface of the second body 8. More specifically, the lower end portion of the rack guide 44 is fit around a circular boss part 52 produced by forming an annular fitting groove 50 in the top surface of the second body 8. The rack guide 44 is fixed in such a manner that the lower end portion thereof is pressed from above by a ring thread 54 having a large diameter screwed in the upper end of the second body 8. The circular boss part 52 functions as a "fitting part" formed coaxially with the valve hole 24. In a modification, the rack guide 44 may be fixed in the second body 8 by press-fitting or swaging.

In the present embodiment, since the second body 8 is formed by cutting using a lathe, the valve hole 24 (the valve seat 26), a fitting hole in the portion into which the sliding bearing 36 is press-fitted, a fitting hole in the portion into which the guide member 38 is press-fitted, and the circular boss part 52 are coaxial. The sliding bearing 36, the guide member 38, and the rack guide 44 thus have high coaxiality with the valve hole 24 (the valve seat 26). The sliding bearing 36 functions as a "support part" supporting a lower end portion of a shaft 60.

As illustrated in FIG. 1, the actuating rod 32 is formed by assembly of the shaft 60, a worm 62, and a stopper 64. The shaft 60 is produced by cutting a rod material made of SUS, has a cylindrical lower half part with a large diameter, and has an external thread 66 formed on an outer surface of the lower half part. In the present embodiment, the external thread 66 is constituted by a trapezoidal thread with high thrust and excellent abrasion resistance. In a modification, the external thread 66 may be constituted by a triangular thread. The external thread 66 is engaged with the internal thread 39 of the guide member 38. The external thread 66 and the internal thread 39 are lead screws for displacing the shaft 60 relative to the body 5 in the axial direction, and constitute the "screw mechanism", which will be described later. Thus, the lower half part of the shaft 60 functions as an "external threaded portion". In the present embodiment, the external thread 66 and the internal thread 39 are subjected to diamond-like carbon (DLC) coating, so that the load bearing capacities thereof are increased. In a modification, surface treatment excellent in load bearing capacity, abrasion resistance and sliding friction reduction may be employed instead of the DLC coating. Alternatively, precipitation hardening stainless steel may be used.

The stopper 64 and the worm 62 are disposed around an upper half part of the shaft 60. The upper half part of the shaft 60 has a non-circular cross-section, and the stopper 64 and the worm 62 have through-holes of the same shape. This prevents the stopper 64 and the worm 62 from being displaced relative to each other after being fitted around the shaft 60. The stopper 64 is held between the lower half part of the shaft 60 and the worm 62.

A hollow space S, which is open downward (that is, at a leading end of the shaft 60), is formed in the lower half part of the shaft 60. The hollow space S contains a spring 63 (functioning as a "biasing member"), a spring holder 65, and the valve element 34 in this order from the top. A cylindrical bush 67 (press-fitted bush) is concentrically press-fitted into the lower end opening of the shaft 60, and slidably supports the valve element 34 from below. The valve element 34 is made of SUS, and the spring holder 65 and the bush 67 are made of a copper alloy. The bush 67 functions as a "support part". Since the shaft 60 and the bush 67 are integrated, the shaft 60 and the bush 67 can collectively be regarded as a "shaft" in a broad sense. A lower end opening of the bush 67 constitutes a "leading end opening" of the shaft.

The valve element 34 is disposed through the bush 67, and has a flange part 69 protruding radially outward from an upper end portion thereof. A bottom surface of the flange part 69 is stopped by a top surface of the bush 67, so that the valve element 34 is prevented from dropping off downward. The spring holder 65 transmits downward biasing force (in a valve closing direction) of the spring 63 to the valve element 34. The upper end of the valve element 34 has a convex spherical surface of a hemispherical shape, and a bottom surface of the spring holder 65 is a concave spherical surface. The valve element 34 and the spring holder 65 are in contact with each other at the spherical surfaces thereof. With this configuration, the axes of the valve element 34 and the spring holder 65 become less likely to be misaligned, and even if these axes are misaligned, the valve element 34 and the spring holder 65 make alignment operation with each other. The valve element 34 rotates integrally with the bush 67 and the spring holder 65 while the valve element 34 is not in contact with the valve seat 26. The rotation of the valve element 34, however, is restricted while the valve element 34 is in contact with the valve seat 26. The curved surface shape of the valve element 34 prevents or reduces friction between the valve element 34 and the spring holder 65 in such a state. Furthermore, the contact between the spherical surfaces of the valve element 34 and the spring holder 65 causes moderate, autonomous alignment function of the valve element 34 with respect to the valve hole 24 and the valve seat 26. Details thereof will be described later.

One portion in the circumference direction of the small diameter part 48 of the rack guide 44 is recessed radially outward, and forms a flat guide portion 68 extending in the vertical direction with a predetermined width. The guide portion 68 extends parallel to the axis of the worm 62 and contains a small piece of rack 70. The rack 70 has a prismatic body 71. The body 71 has a rectangular cross-section that is complementary to the shape of the guide portion 68, and has an inner surface that is engaged with the worm 62. The rack 70 is guided by the guide portion 68 with the rotation of the worm 62 to make translational movement in the vertical direction. A stopper 72 for stopping the rack 70 at the top dead center protrudes from a top surface of the body 71, and a stopper 74 for stopping the rack 70 at the bottom dead center protrudes from a bottom surface thereof. The configuration and the operation of the rack 70 will be described in detail below.

A communicating hole 76 connecting the inside and the outside of the rack guide 44 is formed at a stepped portion between the large diameter part 46 and the small diameter part 48. Furthermore, a communicating groove 77 for connecting the inside and the outside of the rack guide 44 is formed in an inner surface at a lower end portion of the rack guide 44. The communicating groove 77 constitutes part of the communicating passage 30. Such a structure allows refrigerant in the upstream passage 16 to be also introduced into the motor unit 4. Furthermore, a communicating hole 150 connecting the inside and the outside of the shaft 60 is formed at an intermediate portion in the axial direction of the shaft 60. The communicating hole 150 constitutes part of the communicating passage 30, and allows the inlet port 10 and the hollow space S to communicate therethrough. Liquid refrigerant introduced into the communicating passage 30 through the inlet port 10 passes through the communicating hole 150, the hollow space S, and a spacing between the valve element 34 and the bush 67, and is delivered through the lower end opening of the bush 67. Thus, the communicating passage 30 including the communicating hole 150 functions as a "refrigerant introducing passage" through which liquid refrigerant is introduced into the hollow space S. The large diameter part 46 is inserted in a lower end portion of the rotor 31 with a small clearance therebetween. The clearance has such a size that can prevent whirling of the rotor 31.

The motor unit 4 is a stepping motor including the rotor 31 and a stator coil 33. The motor unit 4 includes a can 35 having a bottomed cylindrical shape, the rotor 31 is disposed inside the can 35, and the stator coil 33 is disposed outside the can 35. The can 35 is a cylindrical member covering a space in which the valve element 34 and a mechanism for driving the valve element 34 are disposed and containing the rotor 31, and defines an internal pressure acting space in which the pressure of the refrigerant acts and an external non pressure acting space in which the pressure of the refrigerant does not act.

The can 35 includes a nonmagnetic, cylindrical body 80, a disc-shaped end member 82 that closes an upper end opening of the body 80, and an annular connecting member 84 that is coupled to a lower end of the body 80. The connecting member 84 has a lower end portion with an external thread formed thereon, and also functions as a ring thread. An upper end portion of the first body 6 has an internal thread formed thereon that can be engaged with the external thread. The motor unit 4 can be secured to the body 5 by engaging and tightening the connecting member 84 with the first body 6. As illustrated, the connecting member 84 is mounted around an upper half part of the second body 8. An O-ring 86 for sealing is disposed between the upper end portion of the first body 6 and the connecting member 84 to prevent refrigerant introduced through the inlet port 10 from passing between the can 35 and the body 5 and leaking outside. In a modification, the can 35 (connecting member 84) may be fixed in the first body 6 by press-fitting, swaging, welding, or the like.

The stator coil 33 contains an exciting coil 88, and is disposed around the can 35. The stator coil 33 is fixed to the body 5. The connection of the stator coil 33 to the body 5 can be obtained by screwing, welding, brazing, or swaging, for example. Since the stator coil 33 is disposed in the atmosphere that is not affected by the pressure of the refrigerant, such a securing strength at which the stator coil 33 can withstand vibration under an environment in which the motor operated valve 1 is applied, such as an in-vehicle environment, will be sufficient, which need not be as strong as that for the can 35 required to be secured in a pressure-resistant manner.

The rotor 31 includes a cylindrical rotor core 90 coaxial with the shaft 60, and a magnet 92 disposed along the circumference of the rotor core 90. An internal space over substantially the entire length of the rotor core 90 is formed inside the rotor core 90. Guide portions 94 extending parallel to the axis of the rotor core 90 are formed at 45-degree intervals in the circumferential direction on an inner surface of the rotor core 90. The guide portions 94 are constituted by elongated protrusions (ribs) extending parallel to the axis.

Upper end portions of the guide portions 94 extend radially inward and connected at a cylindrical shaft 96. This cylindrical shaft 96 is coaxially fixed to an upper end portion of the actuating rod 32. The fixing is achieved by fitting the cylindrical shaft 96 into the upper end portion of the actuating rod 32 and screwing a nut 98. A stopper 99 is provided at a predetermined position of the cylindrical shaft 96 to define the top dead center of the rack 70.

With the configuration as described above, the actuating rod 32, which is a rotational shaft of the rotor 31, is supported at two points by the small diameter part 48 of the rack guide 44 and the sliding bearing 36. Furthermore, the clearance between the large diameter part 46 of the rack guide 44 and the guide portions 94 is set so that the runout of the rotor 31 can be restricted. Thus, when the motor operated valve 1 is mounted in a vehicle, the rotor 31 is less likely to be affected by vibration and can stably rotate about the axis. Although the actuating rod 32 is rotatably supported by the rack guide 44 at the position of the worm 62, no problem of friction will be caused therebetween since both the worm 62 and the rack guide 44 are made of self-lubricating plastic materials.

The rack 70 makes translational movement in the vertical direction with the rotation of the rotor 31. When the rack 70 moves upward with the rotation of the rotor 31 in one direction and reaches a preset top dead center, the rack 70 and the stopper 99 stop each other to restrict the rotation of the shaft 60. As a result, downward displacement of the shaft 60 (in the valve closing direction) is restricted. At this point, the shaft 60 is located at its bottom dead center. Conversely, when the rack 70 moves downward with the rotation of the rotor 31 in the other direction (in the opposite direction) and reaches a preset bottom dead center, the rack 70 and the stopper 64 stop each other to restrict the rotation of the shaft 60. At this point, the shaft 60 is located at its top dead center. As a result, upward displacement of the shaft 60 (in the valve opening direction) is restricted. Thus, in the present embodiment, the stopper 99 functions as a "first stopper", and the stopper 64 functions as a "second stopper". In addition, the worm 62, the rack 70, the stopper 64, and the stopper 99 function as a "stopper mechanism" for restricting the rotation amounts of the shaft 60 in one direction and in the other direction.

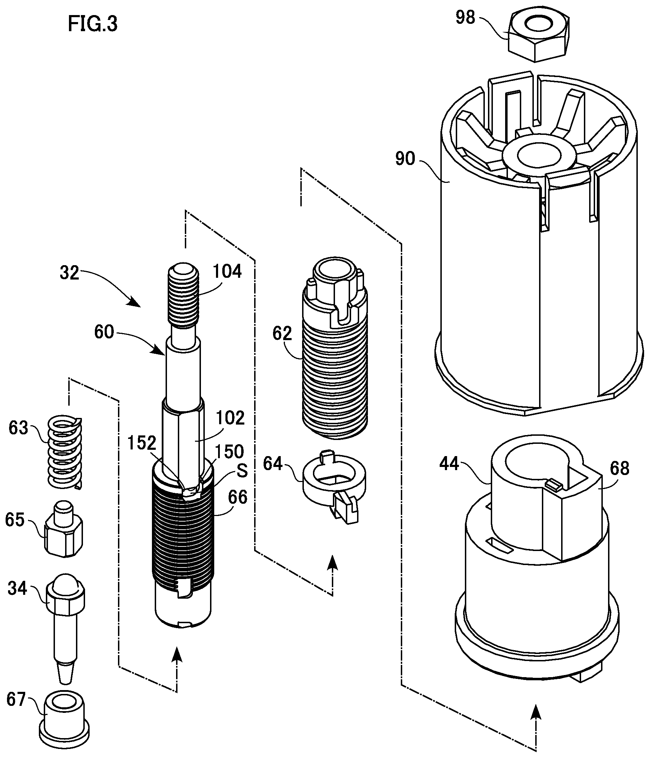

Details of respective components of the motor operated valve 1 will now be described. FIG. 3 is an exploded perspective view illustrating components of the rotor 31 and the actuating rod 32. The shaft 60 has a stepped cylindrical external shape whose diameter decreases in a stepwise manner from the bottom to the top. A fitting portion 102 having a noncircular cross-section (a so-called D-cut structure) is formed immediately above the external thread 66 of the shaft 60. The external thread 66 has a hollow space S formed therein. In forming a flat surface of the fitting portion 102, part of the hollow space S is exposed and forms the communicating hole 150. In this process, a part of an upper end portion of the external thread 66 is cut out as illustrated. Note that the cut part 152 is formed at a portion, which does not engage with the internal thread 39, of the external thread 66 (see FIGS. 1 and 2). In other words, the communicating hole 150 is formed at a part where the external thread 66 of the shaft 60 and the internal thread 39 of the guide member 38 do not engage with each other. An external thread 104 is formed on an upper end portion of the shaft 60. The spring 63, the spring holder 65, and the valve element 34 are inserted in this order through the lower end opening of the shaft 60, the bush 67 is press-fitted so that these components are held inside the shaft 60.

The actuating rod 32 is assembled by mounting the stopper 64 and the worm 62 in this order from the top of the shaft 60 so that the actuating rod 32 extends therethrough. The stopper 64 and the worm 62 are individually produced by injection molding a plastic material (glass-fiber reinforced plastic) such as polyphenylene sulfide (hereinafter referred to as "PPS") containing glass fiber, and have insertion holes having shapes complementary to the shape of the fitting portion 102. The stopper 64 and the worm 62 are thus positioned concurrently with the mounting on the shaft 60, which prevents slippage after the assembly. The communicating hole 150 is formed to have an open end at a spacing between the stopper 64 and the external thread 66.

In assembly of the motor operated valve 1, the sliding bearing 36 and the guide member 38 are mounted in this order in the second body 8 and fixed by the ring thread 42 as illustrated in FIG. 1. In this state, the actuating rod 32 assembled as described above is screwed with the guide member 38 so that the actuating rod 32 is coaxially mounted. Subsequently, in a state in which the rack 70 is engaged with the worm 62, the rack guide 44 is mounted from above. In this process, the lower end portion of the rack guide 44 is fit to the circular boss part 52 while the rack 70 is positioned to be contained in the guide portion 68, and secured to the second body 8 by the ring thread 54. In this state, the rotor core 90 is mounted around the rack guide 44, and the nut 98 is screwed onto the external thread 104 protruding from the rotor core 90 to fix the rotor 31 to the actuating rod 32. In a modification, the rotor core 90 and the shaft 60 may be fixed by connection using a retaining ring or a push nut.

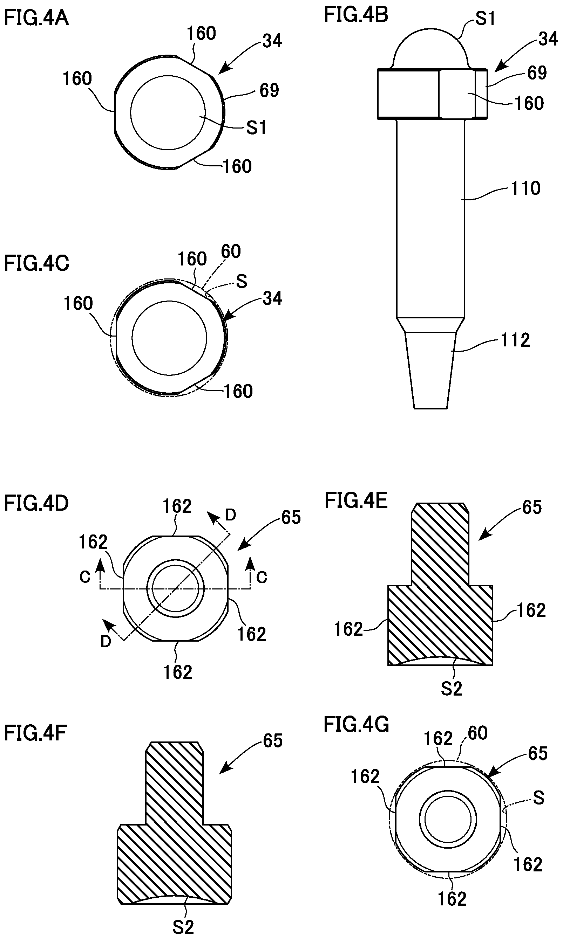

FIGS. 4A to 4G illustrate details of structures of the valve element 34 and the spring holder 65. FIGS. 4A to 4C illustrates the structure of the valve element 34. FIG. 4A is a plan view thereof, and FIG. 4B is a front view thereof. FIG. 4C illustrates a state in which the valve element 34 is inserted in the shaft 60. FIGS. 4D to 4G illustrates the structure of the spring holder 65. FIG. 4D is a plan view thereof, FIG. 4E is a cross-sectional view along arrows C-C in FIG. 4D, and FIG. 4F is a cross-sectional view along arrows D-D in FIG. 4D. FIG. 4G illustrates a state in which the spring holder 65 is inserted in the shaft 60.

As illustrated in FIGS. 4A and 4B, the valve element 34 has a needle-like shape, and has an elongated body 110, a valve forming part 112 formed at a leading end of the body 110, and the flange part 69 protruding radially at a base end of the body 110. The convex spherical surface S1 of the valve element 34 is formed on the base end side of the flange part 69. As illustrated in FIG. 1, the body 110 is slidably supported along an inner surface of the bush 67. The valve forming part 112 has a tapered shape whose cross-section becomes smaller toward the leading end. When the valve forming part 112 is inserted into the valve hole 24, the valve element 34 touches the valve seat 26. The flange part 69 functions as a "stopper". The bottom surface of the flange part 69 is stopped by the top surface of the bush 67, so that the valve element 34 is prevented from dropping off from the shaft 60. The flange part 69 of the valve element 34 has a plurality of (three in the present embodiment) flat surfaces 160 formed at equal intervals at a peripheral edge thereof. This forms spacings between an inner wall of the shaft 60 and the flat surfaces 16 as illustrated in FIG. 4C, which constitute part of the communicating passage 30.

As illustrated in FIGS. 4D to 4F, the spring holder 65 has a stepped columnar shape whose upper half part has a small diameter. The bottom surface of the spring holder 65 is the concave spherical surface S2, which can come in contact with the convex spherical surface S1. The spring holder 65 has a plurality of (four in the present embodiment) flat surfaces 162 formed at equal intervals at a peripheral edge thereof. This forms spacings between the inner wall of the shaft 60 and the flat surfaces 162 as illustrated in FIG. 4G, which constitute part of the communicating passage 30. The spring holder 65 is slidably supported in the axial direction along an inner surface of the hollow space S of the shaft 60.

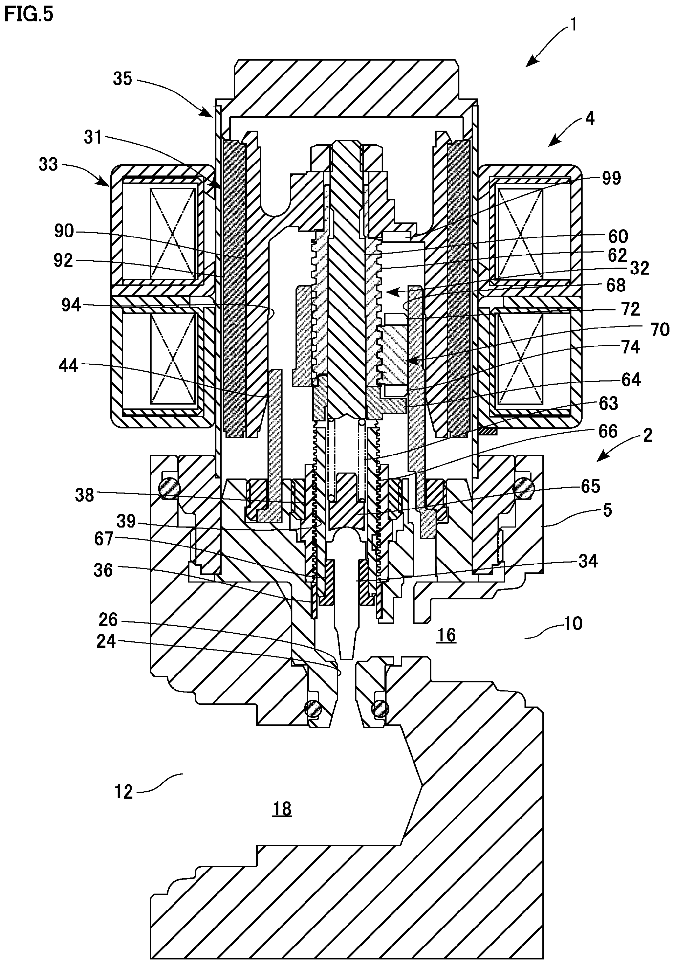

The motor operated valve 1 having the configuration as described above functions as a stepping motor operated control valve whose valve opening degree can be adjusted by drive control of the motor unit 4. The overall operation of the motor operated valve 1 will now be described. FIG. 5 is a cross-sectional view illustrating the operation of the control valve. FIG. 1 described above illustrates a valve closed state, while FIG. 5 illustrates a fully open state.

In flow rate control using the motor operated valve 1, a non-illustrated controller of an automotive air conditioner computes the number of driving steps of the stepping motor according to a preset opening degree, and supplies a drive current (drive pulse) to the exciting coil 88. This causes the rotor 31 to rotate, and the shaft 60 also rotates therewith. In this process, the shaft 60 makes a translational movement in the vertical direction, that is, in the opening and closing directions of the valve section by a screw mechanism (lead screws) between the shaft 60 and the guide member 38 to adjust the opening degree of the valve section to the preset opening degree. The screw mechanism thus functions as a "motion converting mechanism" that drives the valve element 34 in the opening and closing directions of the valve section by converting rotational movement of the rotor 31 about the axis into translational movement (linear movement) of the shaft 60 (actuating rod 32) in the axial direction.

The rack 70 is driven along the guide portion 68, which restricts the motion range of the valve element 34 to a range between the bottom dead center shown in FIG. 1 and the top dead center shown in FIG. 5. Specifically, when the rotor 31 is rotated in one direction (normal rotation) from the valve closed state illustrated in FIG. 1, the valve element 34 turns into a valve opening state. More specifically, the shaft 60 rotating with the rotor 31 moves upward by the screw mechanism, and the bush 67 displaces the valve element 34 in the valve opening direction in such a manner that the bush 67 pulls the valve element 34 upward. In this process, the rack 70 makes a translational movement in a direction (that is, downward) opposite to the worm 62 moving upward integrally with the shaft 60. As the rotor 31 is rotated in one direction, the opening degree of the valve section increases. When the rack 70 reaches the bottom dead center, the stopper 64 and thus the rotation of the rotor 31 are stopped, and the valve element 34 is stopped at a valve fully open position as illustrated in FIG. 5.

When the rotor 31 is rotated in the other direction (opposite direction) (reverse rotation), the opening degree of the valve section decreases. More specifically, the shaft 60 reversely rotating with the rotor 31 moves downward by the screw mechanism, and the valve element 34 is displaced in the valve closing direction in a state supported by the bush 67. In this process, since the biasing force of the spring 63 is transmitted to the valve element 34 via the spring holder 65, the valve element 34 is stably displaced integrally with the bush 67. In this process, the rack 70 makes a translational movement in the direction (that is, upward) opposite to the worm 62 moving downward integrally with the shaft 60. As a result, when the rack 70 reaches the top dead center, the stopper 99 and thus the rotation of the rotor 31 are stopped, and the valve element 34 is stopped at a valve closed position as illustrated in FIG. 1. Since the valve element 34 is disengaged from the bush 67 at the same time as seating on the valve seat 26, no excessive rotating force about the axis will act between the valve element 34 and the valve seat 26.

As described above, the shaft 60 and the rack 70 are configured to make translational movements opposite to each other along the axial direction according to the rotation of the rotor 31, and the rack 70 is displaced to be contained in the internal space of the rotor 31. This minimizes the translational stroke in the axial direction of the whole internal mechanism of the motor operated valve 1, and the motor operated valve 1 can be made compact.

Since the number of rotations of the rotor 31 corresponds to the number of driving steps that is a control command value, the not-illustrated controller can control the motor operated valve 1 at any opening degree. In the present embodiment, the valve element 34 makes a stroke of 0.5 mm per one rotation of the rotor 31.

A command signal based on the valve opening degree computed on the basis of the temperature at the outlet of the evaporator or other parameters is input to the motor operated valve 1. The motor operated valve 1 controls the valve opening degree according to the command signal. Liquid refrigerant introduced into the motor operated valve 1 from the condenser side through the inlet port 10 is throttled and expanded (adiabatically expanded) to become a spray of gas-liquid mixture refrigerant as the refrigerant passes through the valve section, and delivered through the outlet port 12 toward the 6 is a evaporator.

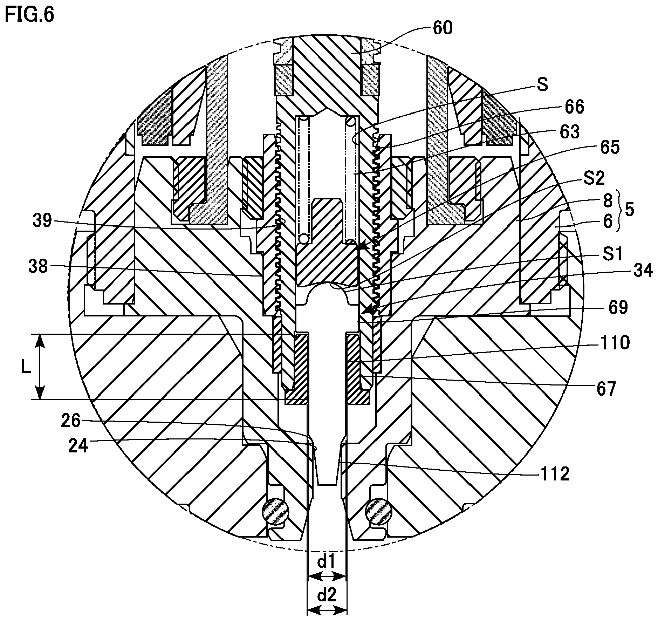

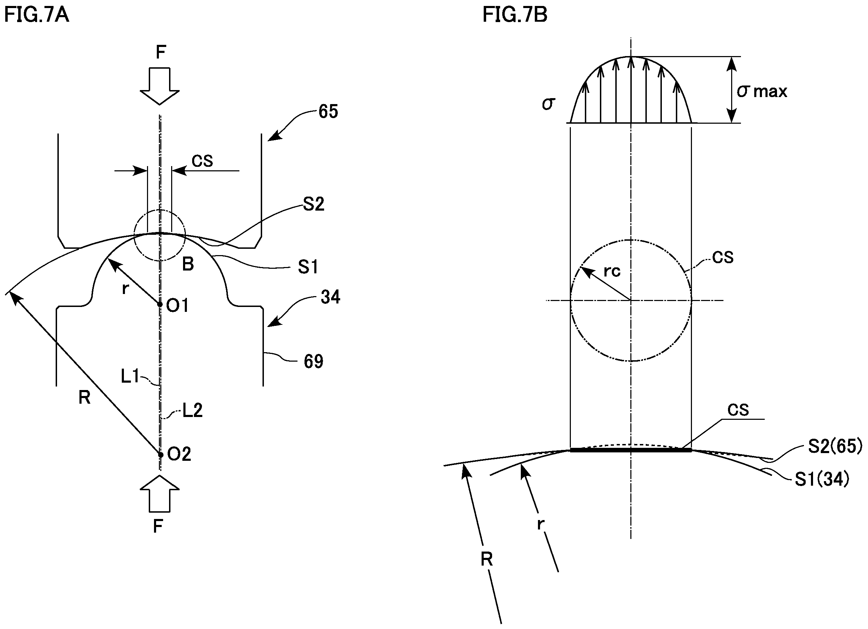

FIG. 6 is a partially enlarged view of a support structure of the valve element 34 and the spring holder 65. FIG. 6 illustrates a cross-section at 45 degrees about the axis with respect to the cross-sections illustrated in FIGS. 1 and 2. FIGS. 7A and 7B are explanatory diagrams illustrating a state in which the valve element 34 and the spring holder 65 are in contact with each other. FIG. 7A illustrates a state in which a load is acting on contact surfaces of the valve element 34 and the spring holder 65. FIG. 7B is an enlarged view of a part B in FIG. 7A.

As illustrated in FIG. 6, the body 110 of the valve element 34 is slidably supported in the axial direction by the bush 67. In the present embodiment, to achieve smooth sliding of the valve element 34, the difference between an outer diameter d1 of the body 110 and an inner diameter d2 of the bush 67 is set to satisfy an allowance of $0.01 \text{ mm} \leq d2 - d1 \leq 0.03 \text{ mm}$. Furthermore, to achieve stable sliding of the valve element 34, the length L of a part, in which the valve element 34 is inserted, of the bush 67 is set to be larger than the diameter of the body 110 of the valve element 34. In other words, the length L of a part, which supports the body 110, of the bush 67 is set to a value satisfying $1 \leq L/d1 \leq 1.5$. This range is set in view of the fact that the valve element 34 is likely to be tilted with respect to the axis of the shaft 60 (the axis of the valve hole 24) if the support length L is smaller than this range while processing satisfying the aforementioned allowance becomes difficult if the support length L is longer than this range.

In the present embodiment, as illustrated, an open end of the valve hole 24 has a flat surface perpendicular to the axis, and the tapered valve forming part 112 of the valve element 34 is inserted into and removed from the valve hole 24. The valve seat 26 initially has a sharp edge but is abraded moderately at an early stage of repeated touching and leaving of the valve element 34 in such a manner that the surface of the valve seat 26 fits in the tapered surface of the valve forming part 112. This early-stage abrasion results in formation of a minute tapered surface of the valve seat 26. The tapered surface of the valve seat 26 has a substantially symmetric shape with respect to the axis. In the present embodiment, in order to prevent this early-stage abrasion from resulting in uneven abrasion, the contact surfaces of the valve element 34 and the spring holder 65 are spherical surfaces as described above. In such a structure, the shapes and the materials of respective members are selected so that the frictional force between the valve element 34 and the valve seat 26 when the valve element 34 touches the valve seat 26 becomes larger than that between the valve element 34 and the spring holder 65.

As illustrated in FIG. 7A, the center O1 of the convex spherical surface S1 is located on the axis L1 of the valve element 34 (see an alternate long and short dashed line). The center O2 of the concave spherical surface S2 is located on the axis L2 of the spring holder 65 (see an alternate long and two short dashed line). In the illustrated example, the axes of the valve element 34 and the spring holder 65 are substantially in alignment with each other. In the present embodiment, the radius of curvature (hereinafter also referred to as a "spherical seat radius R") of the concave spherical surface S2 is set to be larger than the radius of curvature (hereinafter also referred to as a "sphere radius r") of the convex spherical surface S1. Specifically, the shapes and the sizes of the spherical surfaces are set to satisfy $1.4r \leq R \leq 4r$.

This is for the following reason. In the present embodiment, the pitches of the lead screws (the external thread 66, the internal thread 39) illustrated in FIG. 6, etc. are set to be as small as possible so as to allow fine control of the amount by which the valve element 34 is lifted from the valve seat 26. In view of the thread profile processing accuracy, the durability, the strength, and the like of the lead screws, however, there is a limit in reducing the pitches. The pitches are thus set in a range of 0.5 to 0.6 mm. Further, in view of the lead angle and the screw efficiency, the outer diameter of the external thread 66 is set in a range of about 3.5 to 6.0 mm. In view of the disposition of the spring 63, the spring holder 65, and the valve element 34 inside the external thread 66, the inner diameter of the hollow space S of the shaft 60 is set in a range of about 2.5 to 4.5 mm. The sphere radius r of the convex spherical surface S1 is then set to satisfy $1 \text{ mm} \leq r \leq 2 \text{ mm}$ so that the convex spherical surface S1 is within the inner diameter. Furthermore, the spherical seat radius R of the concave spherical surface S2 coming in contact with the convex spherical surface S1 is set to satisfy $1.4r \leq R \leq 4r$.

The Hertz's theory for contact stress is also taken into consideration for the settings mentioned above. Specifically, as also illustrated in FIG. 7B, assume that, when the valve element 34 touches the valve seat 26, a load F acts between the valve element 34 and the spring holder 65, and stress distribution of contact stress σ at the contact interface CS of the convex spherical surface S1 and the concave spherical surface S2 can be obtained. In this state, the contact interface CS is substantially perpendicular to the axes L1 and L3 and has a shape of a circle with a radius rc (also referred to as a "contact interface radius rc"). The contact stress σ becomes a maximum contact stress omax at the center of the contact interface CS and becomes smaller radially outward.

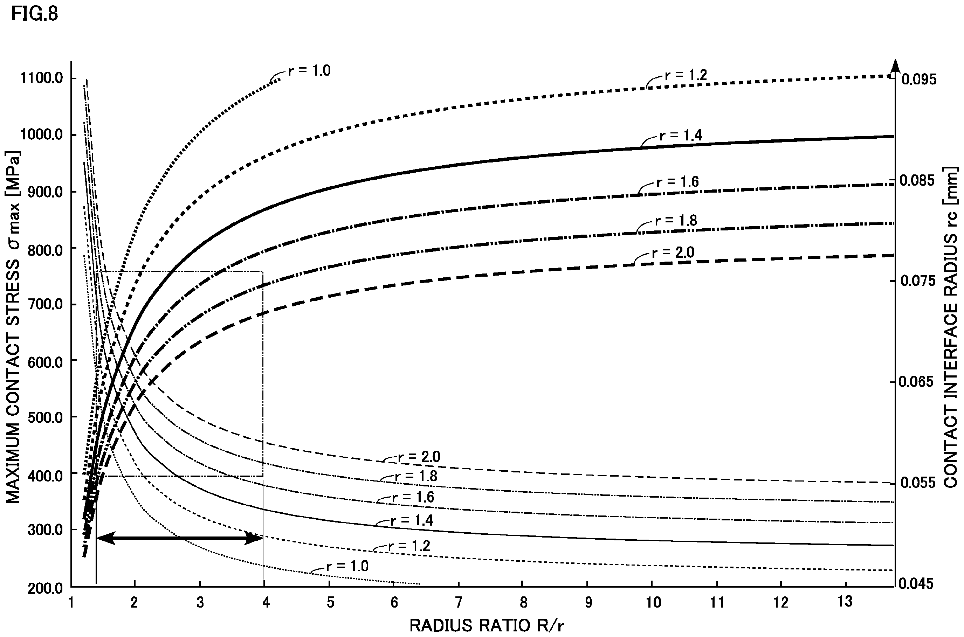

FIG. 8 is a graph showing the relation (analysis result) of the radius ratio R/r, the maximum contact stress omax, and the contact interface radius rc of the convex spherical surface S1 and the concave spherical surface S2. In FIG. 8, the horizontal axis represents the radius ratio R/r, and the vertical axis represents the maximum contact stress omax and the contact interface radius rc. In FIG. 8, thick lines represent the maximum contact stress omax while thin lines represent the contact interface radius rc. FIG. 8 shows respective cases where the sphere radius r of the convex spherical surface S1 is 1.0 mm (thin dotted line), 1.2 mm (sparsely dotted line), 1.4 mm (solid line), 1.6 mm (alternate long and short dashed line), 1.8 mm (alternate long and two short dashed line), and 2.0 mm (broken line). Herein, the valve element 34 and the spring holder 65 are assumed to be made of the same type of metal, and calculations are based on the assumption of the longitudinal elasticity modulus K thereof being 195 MPa and the yield stress os thereof being 320 MPa.

This analysis result shows the following. As the radius ratio R/r, which is a ratio of the spherical seat radius R to the sphere radius r is larger, the contact interface radius rc is smaller and the maximum contact stress omax is larger. At radius ratios R/r exceeding 4, however, the contact interface radius rc and the maximum contact stress σmax tend to converge. According to the Hertz's theory, when the maximum contact stress σmax exceeds twice the yield stress os ($\sigma\text{max} > 2\sigma s$), the contact interface CS yields over the entire area thereof to form permanent surfaces resulting from elastic deformation and abrasion. In view of making the valve element 34 and the valve seat 26 fit each other through the early-stage abrasion, a condition of $\sigma\text{max} \leq 2.4\text{os}$ is preferable (see the box in an alternate long and two short dashed line). In contrast, as the radius ratio R/r becomes closer to 1, the convex spherical surface S1 and the concave spherical surface S2 are in contact with each other in such a state that the convex spherical surface S1 and the concave spherical surface S2 are almost fitted to each other, which makes the valve element 34 and the spring holder 65 easily restrain each other by the shapes of the contact portions. As a result, the autonomous alignment function of the valve element 34 may not be achieved. Thus, in the present embodiment, the range that allows a moderate alignment function of the valve element 34 to be achieved and reduces abrasion of the valve element 34 and the spring holder 65 is set to the aforementioned range ($1.4r \leq R \leq 4r$: see the thick arrow).

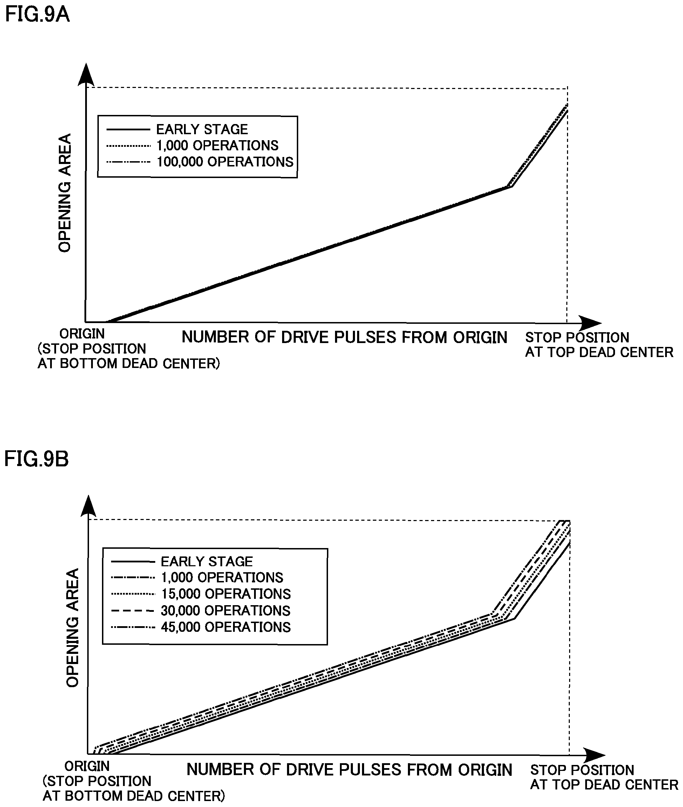

FIGS. 9A and 9B are graphs showing effects of the embodiment. FIG. 9A shows a result of an abrasion resistance test of the valve section according to the present embodiment. Specifically, with a structure in which a valve element and a spring holder are in contact with each other at spherical surfaces thereof and the radius ratio R/r of the spherical surfaces is set within the aforementioned range, the valve opening positions while opening and closing operations of the valve section were repeated were measured. FIG. 9B shows a result of an abrasion resistance test of a valve section according to a comparative example. In the comparative example, the contact surface of the valve element is a flat surface and the contact surface of the spring holder is a spherical surface as taught in JP 2014-196810 A. In each of FIGS. 9A and 9B, the horizontal axis represents the number of drive pulses from the origin, and the vertical axis represents the opening area of the valve section. Note that the "origin" used herein refers to a position where the shaft 60 is positioned at the bottom dead center and the rotation of the rotor 31 is stopped.

In the vicinity of the bottom dead center, the flange part 69 of the valve element 34 moves away from the bush 67 and the operational connection between the valve element 34 and the shaft 60 is disconnected as illustrated in FIG. 6. Specifically, while the valve is open, the biasing force of the spring 63 transmitted through the spring holder 65 maintains a state in which the flange part 69 is in contact with a top end surface (base end surface) of the bush 67. In contrast, while the valve is closed, a reaction force received by the valve element 34 from the valve seat 26 compresses the spring 63, and the flange part 69 moves away from the top end surface of the bush 67.

As shown in FIG. 9A, according to the present embodiment, even when the valve section is opened and closed a hundred thousand times, the valve closing position (a position where the valve element 34 fully touches the valve seat 26 and the opening area is zero) based on the origin does not change substantially. This is considered to be because the valve element 34 and the spring holder 65 are in contact with each other at the spherical surfaces thereof as described above, resulting in that the axes thereof are less likely to be misaligned, the alignment function of the valve element 34 is moderately exhibited so that uneven abrasion is reduced, and the valve seat 26 is subjected to minute early-stage abrasion as a whole. Note that control is performed for a predetermined number of pulses between the origin position and the valve closed position. This means that the spring 63 is compressed while the rotation of the shaft 60 is continued during a period after the valve element 34 has touched the valve seat 26 until the shaft 60 reaches the bottom dead center (a period of 1/3 to 1 rotation from the touching).

In contrast, in the comparative example, the valve closed position comes closer to the origin as the opening and closing of the valve section are repeated. This is considered to be because the axes of the valve element and the spring holder become more likely to be misaligned since the spherical surface and the valve element and the spring holder are in contact with each other at the spherical surface and the flat surface. Specifically, the misalignment causes a lateral force applied on the valve element, and edge loading of the valve element touching the valve seat in an eccentric state is repeated. Furthermore, the misalignment of the axes causes precession of the valve element after touching the valve seat. These factors are considered to cause uneven abrasion on the valve seat and make the uneven abrasion progress every time the valve element touches the valve seat. In other words, such circumstances can be avoided and change in the flow rate characteristics due to abrasion of the valve seat can be prevented or reduced by employing the present embodiment.

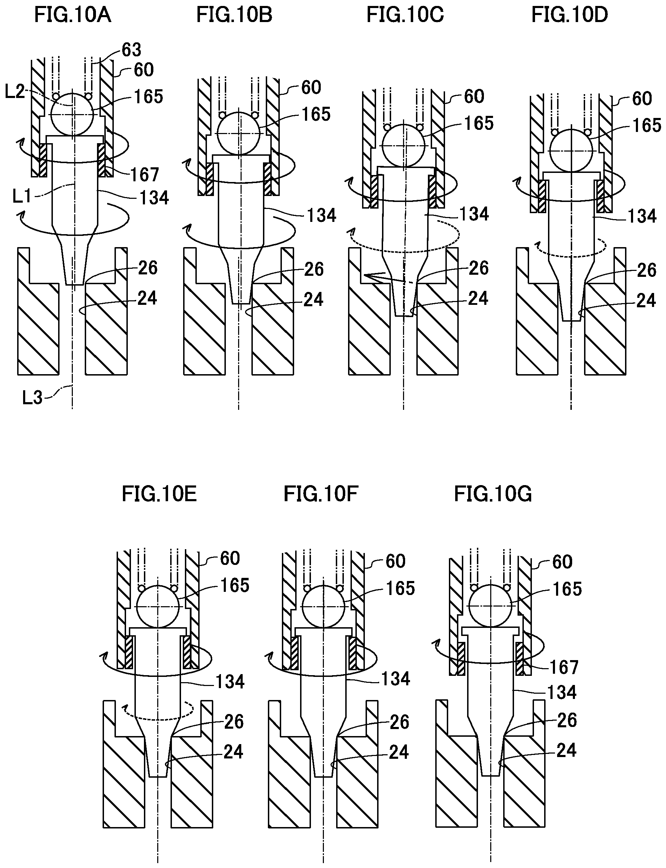

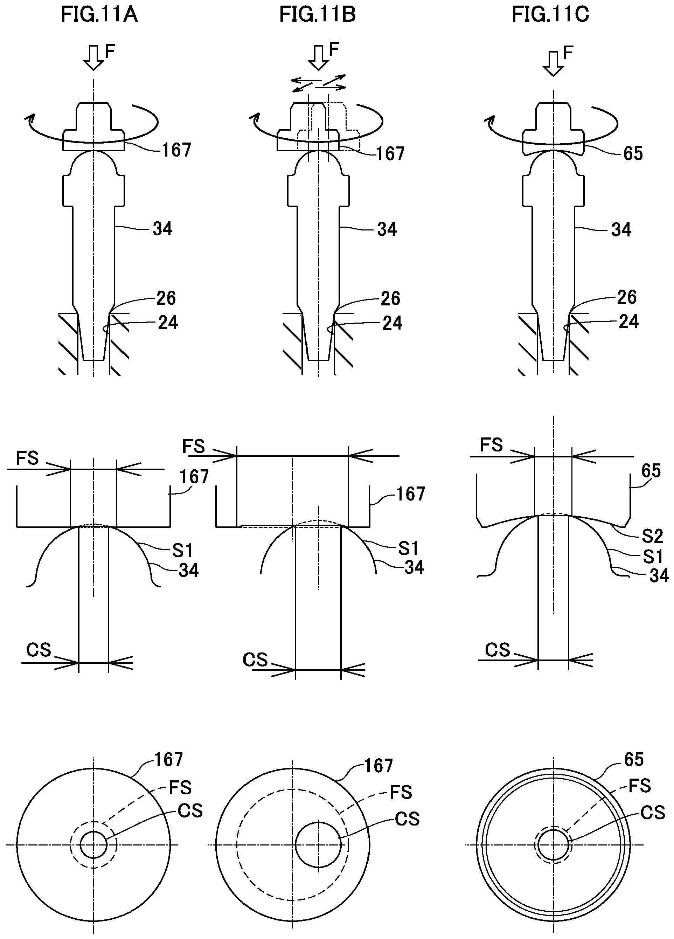

Here, the mechanisms of touching the valve seat in the present embodiment and in the comparative example will be considered. FIGS. 10A to 10G are schematic views illustrating the alignment function of the valve element according to the comparative example. FIGS. 10A to 10G illustrate operation of the valve element during a process of change from a valve opening state to a valve closed state. FIGS. 11A to 11C are diagrams illustrating effects of contact between spherical surfaces. FIGS. 11A and 11B illustrate a case where the valve element and the spring holder are in contact with each other at a flat surface and a spherical surface thereof. FIG. 11C illustrates a case where the valve element and the spring holder are in contact with each other at spherical surfaces thereof. In each of the figures, the upper part illustrates operations of the valve element and the spring holder after the valve element touches the valve seat, the middle part illustrates the vicinity of the contact between the valve element and the spring holder, and the lower part illustrates the state of abrasion of the contact surface of the spring holder as viewed from below.

As illustrated in FIG. 10A, a case where the axes of a valve element 134 and a spring holder 165 are misaligned is assumed in a structure in which the valve element 134 and the spring holder 165 are in contact with each other at a flat surface and a spherical surface thereof. In the illustrated example, the axis L1 of the valve element 134 is misaligned with respect to the axis L3 of the valve seat 26 (the valve hole 24), and as a result, the axis L1 of the valve element 134 and the axis L2 of the spring holder 165 are misaligned with respect to each other. As illustrated, in a state in which the valve element 134 is completely separated from the valve hole 24, the valve element 134 and the spring holder 165 rotate integrally.

The shaft 60 moves downward from this state, which results in an edge loading state in which the valve element 134 is in contact with the valve seat 26 with the axes misaligned as illustrated in FIG. 10B, and the valve element 134 rotates while sliding in a state in which the valve element 134 is locally in contact with the valve seat 26. The shaft 60 moves further downward, the valve element 134 is then subjected to a resistance from the valve seat 26 and is thus tilted, the valve element 134 and the spring holder 165 start sliding with respect to each other, and the valve element 134 precesses, as illustrated in FIG. 10C. As a result, local wear (uneven abrasion) occurs on the valve seat 26. As illustrated in FIGS. 10D and 10E, however, as the tapered surface of the valve element 134 is inserted into the valve hole 24, the valve element 134 autonomously performs alignment operation so that the axis thereof becomes in alignment with that of the valve hole 24. When the valve element 134 touches the valve seat 26 in this manner as illustrated in FIG. 10F, the valve element 134 stops rotating and only slides relative to the spring holder 165. Since the shaft 60 moves downward by a predetermined amount even after the valve element 134 touches the valve seat 26, the valve element 134 moves away from the bush 167 as illustrated in FIG. 10G. The precession as described above occurring every time the valve element 134 repeats the valve closing operation makes the uneven abrasion of the valve seat 26 progress and causes a change in the flow rate characteristics of the motor operated valve.

FIGS. 11A and 11B illustrate another comparative example in which the contact surface of the spring holder 167 is a flat surface. In this comparative example as well, the precession described above is likely to occur. If an ideal state in which the axes of the valve element 34 and the spring holder 167 are in alignment with each other can be maintained as illustrated in FIG. 11A, the abraded surface FS of the spring holder 167 can be suppressed to be small and the contact interface CS can be kept small even when the valve element 34 repeatedly touches the valve seat 26. As a result, the rotational force of the spring holder 167 is less likely to be transmitted to the valve element 34 when the valve element 34 touches the valve seat 26, which can prevent or reduce uneven abrasion of the valve seat 26. In fact, however, since the flat surface and the spherical surface do not have restraining force on each other, it is difficult to keep the axes thereof in alignment. Thus, as illustrated in FIG. 11B, the axes of the valve element 34 and the spring holder 167 are likely to be misaligned, and the precession of the valve element 34 is likely to occur. The abraded surface FS of the spring holder 167 thus becomes larger in the process of the valve element 34 repeatedly touching the valve seat 26, which also makes the contact interface CS larger. As a result, the rotational force of the spring holder 167 is largely transmitted to the valve element 34 even after the valve element 34 touches the valve seat 26, and uneven abrasion is likely to progress.

In this regard, in the present embodiment, since the contact surfaces of the valve element 34 and the spring holder 65 are spherical surfaces as illustrated in FIG. 11C, the axes thereof are less likely to be misaligned, the abraded surface FS of the spring holder 65 can be kept small and the contact interface CS can be kept small even when the valve element 34 repeatedly touches the valve seat 26. As a result, transmission of the rotational force of the spring holder 65 to the valve element 34 after the valve element 34 touches the valve seat 26 can be prevented or reduced, and uneven abrasion of the valve seat 26 can be prevented or reduced.

The description of the present invention given above is based upon illustrative embodiments. These embodiments are intended to be illustrative only and it will be obvious to those skilled in the art that various modifications could be further developed within the technical idea underlying the present invention.

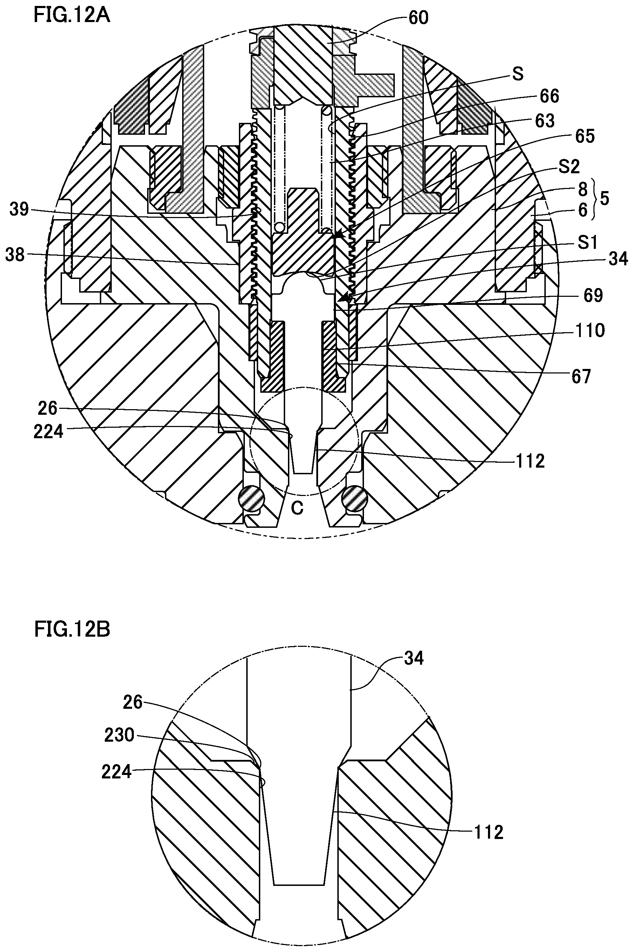

FIGS 12A and 12B illustrate main parts of a motor operated valve according to a modification. FIG. 12A is a partially enlarged view of a support structure of a valve element and a spring holder. FIG. 12B is an enlarged view of a part C in FIG. 12A. In this modification, a valve hole 224 has a tapered surface 230 at an open end thereof, and the valve seat 26 is set at an inner end of the tapered surface 230. This structure makes a tapered surface of the valve element 34 and the tapered surface 230 of the valve hole 224 likely to be fitted to each other at an earlier state, and can prevent or reduce uneven abrasion of the valve seat 26.

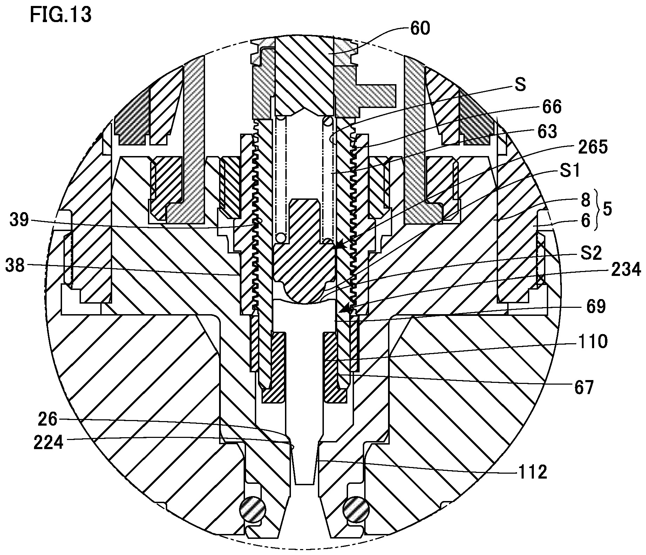

FIG. 13 illustrates a main part of a motor operated valve according to another modification. In this modification, contrary to the embodiment above, a valve element 234 has a concave spherical surface S2 while a spring holder 265 has a convex spherical surface S1. This structure also achieves alignment effect (axis-misalignment preventing effect) between the spherical surfaces, and can also produce the effects similar to those of the embodiment above with the radius radio R/r of the spherical surfaces set within the aforementioned range.

While an example in which the motor of the motor operated valve is a stepping motor has been described in the embodiment, the motor may be another motor such as a DC motor.

While the motor operated valve has a structure of an expansion valve of a small diameter in the embodiment, the motor operated valve may be a control valve without an expanding function. For example, the motor operated valve may have a structure of an on-off valve or a flow control valve of a large diameter, for example.

While an example in which the needle-like valve element 34 is employed has been presented in the embodiment, the valve element may have other shapes. For example, a valve forming part having a larger diameter than the body 110 illustrated in FIG. 4B may be provided at a leading end of the body 110. In this case, the valve forming part may have any of various shapes such as spherical, columnar, and tapered shapes. A larger valve forming part can increase the flow rate controlled at the valve section. At the base end of the body 110, however, a convex spherical surface or a concave spherical surface is formed similarly to the embodiment and modifications.

In the above-described embodiment, a structure in which the inner diameter of the valve hole 24 is smaller than the outer diameter of the valve element 34 (valve forming part 112) and the valve element 34 is configured to touch and leave the valve seat 26 has been presented. In a modification, the motor operated valve may be a spool valve in which the inner diameter of a valve hole is larger than the outer diameter of a valve element (valve forming part) and the valve element is inserted into and removed from the valve hole without receiving a reactive force from a valve seat. Such a motor operated valve can also increase the autonomous alignment function of the valve element by employing the contact structure of spherical surfaces of the embodiment or a modification thereof.

In the above-described embodiment, an example in which the shaft 60 is provided coaxially with the rotor 31 has been presented. In a modification, the rotor and the shaft may be provided along different axes from each other. For example, the axes thereof may be misaligned in parallel. In addition, a gear mechanism may be disposed between the shaft and a shaft of the rotor.

Although the motor operated valve according to the above-described embodiment is suitably applicable to a refrigeration cycle using an alternative for chlorofluorocarbon (HFC-134a) or the like as the refrigerant, the motor operated valve can also be applied to a refrigeration cycle using a refrigerant such as carbon dioxide with high working pressure. In this case, an external heat exchanger such as a gas cooler is provided instead of the condenser in the refrigeration cycle.

Although an example in which the motor operated valve is applied to a refrigeration cycle in an automotive air conditioner has been presented in the above-described embodiment, the motor operated valve can also be applied to an air conditioner using a motor operated expansion valve other than those for vehicles. Furthermore, the motor operated valve may be a motor operated valve for controlling a flow of fluid other than refrigerant.

## Claims

1. A motor operated valve (1), comprising:

   a body (5) having an inlet port (10) through which fluid is introduced from an upstream side, an outlet port (12) through which fluid is delivered to a downstream side, and a valve hole (24, 224) through which the inlet port (10) and the outlet port (12) communicate with each other;
   a valve element (34, 234) configured to open and close a valve section by moving away from and toward a valve seat (26) formed at an open end of the valve hole (24, 224);
   a motor (4) including a rotor (31) for driving the valve element (34, 234) in opening and closing directions of the valve section;
   a shaft (60) configured to rotate with the rotor (31), the shaft (60) having a hollow space (S) open at a leading end thereof and slidably supporting the valve element (34, 234) in an axial direction thereof, the valve element (34, 234) being partially inserted in the hollow space (S);
   a spring (63) being disposed in the hollow space (S), the spring (63) being configured to bias the valve element (34, 234) in a direction in which the valve element (34, 234) protrudes through a leading end opening of the shaft (60);
   a spring holder (65, 265) disposed in the hollow space (S) and between the spring (63) and the valve element (34, 234), the spring holder (65, 265) receiving the spring (63) at one end thereof and coming in contact with an end of the valve element (34, 234) at the other end thereof; and
   a motion converting mechanism configured to convert rotational movement of the rotor (31) into translational movement of the shaft (60) in the axial direction thereof,
   wherein surfaces of the valve element (34, 234) and the spring holder (65, 265) coming in contact with each other are spherical surfaces, one of which being a convex spherical surface (S1) while the other of which being a concave spherical surface (S2) having a larger radius of curvature than the convex spherical surface (S1), wherein a center of the spherical surface of the valve element (34, 234) is located on an axis of the valve element (34, 234), and wherein when the radius of curvature of the concave spherical surface (S2) is represented by R and the radius of curvature of the convex spherical surface (S1) is represented by r, R and r satisfy:

$$1.4r \le R \le 4r.$$

2. A motor operated valve (1) according to claim 1, wherein a frictional force between the valve element (34, 234) and the valve seat (26) when the valve element (34, 234) touches the valve seat (26) is set to be larger than a frictional force between the valve element (34, 234) and the spring holder (65, 265).

3. A motor operated valve (1) according to claim 1 or claim 2,
   wherein the spring holder (65, 265) is slidably supported along an inner surface of the shaft (60) in the axial direction thereof.

4. A motor operated valve (1) according to any one of claims 1 to 3, wherein the valve element (34, 234) includes a body (110) slidably supported by the shaft (60), a valve forming part (112) formed at a leading end of the body (110) and configured to touch and leave the valve seat (26), and a stopper (69) protruding radially at a base end of the body (110), the spherical surface of the valve element (34,234) being formed on a base end side of the stopper (69), wherein the shaft (60) includes a support part (67) through which the body (110) of the valve element (34, 234) is slidably extends, the support part (67) being configured to stop the stopper (69) in the axial direction at a base end surface thereof to prevent the valve element (34, 234) from dropping off, wherein, while the valve is open, a biasing force of the spring (63) transmitted via the spring holder (65, 265) maintains a state in which the stopper (69) is in contact with the base end surface of the support part (67), and

wherein, while the valve is closed, a reaction force caused by the valve element (34, 234) touching the valve seat (26) compresses the spring (63) via the spring holder (65, 265), and the stopper (69) moves away from the base end surface of the support part (67).

**5.** A motor operated valve (1) according to claim 4, wherein one end portion of the valve element (34, 234) has a shape with a cross-section becoming smaller toward the end thereof, and the end portion is inserted into the valve hole (24, 224), so that the valve element (34, 234) touches the valve seat (26).

**6.** A motor operated valve (1) according to claim 4 or claim 5, wherein a part, into which the valve element (34, 234) is inserted, of the support part (67) has a length (L) in an axial direction thereof larger than a diameter (d1) of the body (110) of the valve element (34, 234).

**7.** A motor operated valve (1) according to any one of claims 1 to 6, wherein the motion converting mechanism has a screw mechanism including an external thread part (66) integrated with the shaft (60) and an internal thread part (39) integrated with the body (5), the internal thread part (39) coming in engagement with the external thread part (66).

**Patentansprüche**

**1.** Motorbetriebenes Ventil (1), umfassend:

einen Körper (5), der einen Einlassanschluss (10), durch welchen ein Fluid von einer Anströmseite eingeführt wird, einen Auslassanschluss (12), durch welchen ein Fluid einer Abströmseite zugeführt wird, und ein Ventilloch (24, 224) aufweist, durch welches der Einlassanschluss (10) und der Auslassanschluss (12) miteinander in Verbindung stehen;
ein Ventilelement (34, 234), das dazu ausgestaltet ist, einen Ventilabschnitt durch Bewegen weg von und hin zu einem Ventilsitz (26), der an einem offenen Ende des Ventillochs (24, 224) gebildet ist, zu öffnen und zu schließen;
einen Motor (4), der einen Rotor (31) zum Antreiben des Ventilelements (34, 234) in Öffnungs- und Schließrichtung des Ventilabschnitts umfasst;
einen Schaft (60), der dazu ausgestaltet ist, sich mit dem Rotor (31) zu drehen, wobei der Schaft (60) einen Hohlraum (S) aufweist, der an einem vorderen Ende davon geöffnet ist, und das Ventilelement (34, 234) in axialer Richtung davon verschiebbar abstützt, wobei das Ventilelement (34, 234) teilweise in den Hohlraum (S) eingeführt ist;
eine Feder (63), die in dem Hohlraum (S) angeordnet ist, wobei die Feder (63) dazu ausgestaltet ist, das Ventilelement (34, 234) in eine Richtung vorzuspannen, in welcher das Ventilelement (34, 234) durch eine vordere Endöffnung des Schafts (60) ragt;
einen Federhalter (65, 265), der in dem Hohlraum (S) und zwischen der Feder (63) und dem Ventilelement (34, 234) angeordnet ist, wobei der Federhalter (65, 265) die Feder (63) an einem Ende davon aufnimmt und in Kontakt mit einem Ende des Ventilelements (34, 234) an dem anderen Ende davon kommt; und
einen Bewegungsumwandlungsmechanismus, der dazu ausgestaltet ist, eine Drehbewegung des Rotors (31) in eine translatorische Bewegung des Schafts (60) in axialer Richtung davon umzuwandeln,
wobei Flächen des Ventilelements (34, 234) und des Federhalters (65, 265), die miteinander in Kontakt kommen, sphärische Flächen sind, wovon eine Fläche eine konvexe sphärische Fläche (S1) ist, während die andere eine konkave sphärische Fläche (S2) ist, die einen größeren Krümmungsradius aufweist als die konvexe sphärische Fläche (S1),
wobei ein Zentrum der sphärischen Fläche des Ventilelements (34, 234) auf einer Achse des Ventilelements (34, 234) positioniert ist, und wobei, wenn der Krümmungsradius der konkaven sphärischen Fläche (S2) durch R dargestellt ist, und der Krümmungsradius der konvexen sphärischen Fläche (S1) durch r dargestellt ist, R und r Folgendes erfüllen:

$$1{,}4r \leq R \leq 4r.$$

**2.** Motorbetriebenes Ventil (1) nach Anspruch 1, wobei eine Reibungskraft zwischen dem Ventilelement (34, 234) und dem Ventilsitz (26), wenn das Ventilelement (34, 234) den Ventilsitz (26) berührt, so eingestellt ist, dass sie größer als eine Reibungskraft zwischen dem Ventilelement (34, 234) und dem Federhalter (65, 265) ist.

**3.** Motorbetriebenes Ventil (1) nach Anspruch 1 oder Anspruch 2, wobei der Federhalter (65, 265) entlang einer inneren Fläche des Schafts (60) in axialer Richtung davon verschiebbar abgestützt ist.

**4.** Motorbetriebenes Ventil (1) nach einem der Ansprüche 1 bis 3, wobei das Ventilelement (34, 234) einen Körper (110), der vom Schaft (60) verschiebbar abgestützt ist, ein Ventilbildungsteil (112), das an einem vorderen Ende des Körpers (110) gebildet ist und dazu ausgestaltet ist, den Ventilsitz (26) zu berühren und zu verlassen, und einen Stopper (69) umfasst, der radial an einem Basisende des Körpers (110) vorragt, wobei die sphärische Fläche des Ventilelements (34, 234) an einer Basisendseite des Stoppers (69) gebildet ist,

wobei der Schaft (60) ein Abstützteil (67) umfasst, durch welches sich der Körper (110) des Ventilelements (34, 234) verschiebbar erstreckt, wobei das Abstützteil (67) dazu ausgestaltet ist, den Stopper (69) in axialer Richtung an einer Basisendfläche davon anzuhalten, um zu verhindern, dass das Ventilelement (34, 234) herunterfällt,

wobei, während das Ventil geöffnet ist, eine Vorspannkraft der Feder (63), die über den Federhalter (65, 265) übertragen wird, einen Zustand beibehält, in welchem der Stopper (69) in Kontakt mit der Basisendfläche des Abstützteils (67) ist, und

wobei, wenn das Ventil geschlossen ist, eine Reaktionskraft, die von dem Ventilelement (34, 234), das den Ventilsitz (26) berührt, verursacht wird, die Feder (63) über den Federhalter (65, 265) zusammendrückt, und der Stopper (69) sich von der Basisendfläche des Abstützteils (67) wegbewegt.

5. Motorbetriebenes Ventil (1) nach Anspruch 4, wobei ein Endabschnitt des Ventilelements (34, 234) eine Form mit einem Querschnitt aufweist, der in Richtung des Endes davon kleiner wird, und der Endabschnitt in das Ventilloch (24, 224) eingeführt ist, so dass das Ventilelement (34, 234) den Ventilsitz (26) berührt.

6. Motorbetriebenes Ventil (1) nach Anspruch 4 oder Anspruch 5, wobei ein Teil, in welches das Ventilelement (34, 234) eingeführt ist, des Abstützteils (67) eine Länge (L) in axialer Richtung davon aufweist, die größer ist als ein Durchmesser (d1) des Körpers (110) des Ventilelements (34, 234).

7. Motorbetriebenes Ventil (1) nach einem der Ansprüche 1 bis 6, wobei der Bewegungsumwandlungsmechanismus einen Schraubmechanismus aufweist, der ein externes Gewindeteil (66), das in den Schaft (60) integriert ist, und ein internes Gewindeteil (39), das in den Körper (5) integriert ist, umfasst, wobei das interne Gewindeteil (39) in Eingriff mit dem externen Gewindeteil (66) kommt.

**Revendications**

1. Vanne motorisée (1), comprenant:

un corps (5) ayant un orifice d'entrée (10) à travers lequel du fluide est introduit à partir d'un côté amont, un orifice de sortie (12) à travers lequel du fluide est distribué à un côté aval, et un trou de vanne (24, 224) à travers lequel l'orifice d'entrée (10) et l'orifice de sortie (12) communiquent l'un avec l'autre;

un élément de vanne (34, 234) configuré pour ouvrir et fermer une section de vanne en s'éloignant et en se rapprochant d'un siège de vanne (26) formé à une extrémité ouverte du trou de vanne (24, 224);

un moteur (4) comprenant un rotor (31) pour entraîner l'élément de vanne (34, 234) dans des directions d'ouverture et de fermeture de la section de vanne;

un arbre (60) configuré pour tourner avec le rotor (31), l'arbre (60) ayant un espace creux (S) ouvert à une extrémité avant de celui-ci et supportant l'élément de vanne (34, 234) de manière coulissante dans une direction axiale de celui-ci, l'élément de vanne (34, 234) étant partiellement introduit dans l'espace creux (S);

un ressort (63) disposé dans l'espace creux (S), le ressort (63) étant configuré pour solliciter l'élément de vanne (34, 234) dans une direction dans laquelle l'élément de vanne (34, 234) fait saillie à travers une ouverture d'extrémité avant de l'arbre (60);

un support de ressort (65, 265) disposé dans l'espace creux (S) et entre le ressort (63) et l'élément de vanne (34, 234), le support de ressort (65, 265) recevant le ressort (63) à une extrémité de celui-ci et entrant en contact avec une extrémité de l'élément de vanne (34, 234) à l'autre extrémité de celui-ci; et

un mécanisme de transformation de mouvement configuré pour transformer un mouvement de rotation du rotor (31) en mouvement de translation de l'arbre (60) dans la direction axiale de celui-ci,

des surfaces de l'élément de vanne (34, 234) et du support de ressort (65, 265) entrant en contact l'une avec l'autre étant des surfaces sphériques, dont l'une est une surface sphérique convexe (S1) tandis que l'autre est une surface sphérique concave (S2) ayant un rayon de courbure plus grand que la surface sphérique convexe (S1),

un centre de la surface sphérique de l'élément de vanne (34, 234) étant situé sur un axe de l'élément de vanne (34, 234), et

lorsque le rayon de courbure de la surface sphérique concave (S2) est représenté par R et le rayon de courbure de la surface sphérique convexe (S1) est représenté par r, R et r satisfaisant:

$$1{,}4r \leq R \leq 4r.$$

**2.** Vanne motorisée (1) selon la revendication 1, dans laquelle une force de frottement entre l'élément de vanne (34, 234) et le siège de vanne (26) lorsque l'élément de vanne (34, 234) touche le siège de vanne (26) est définie pour être plus grande qu'une force de frottement entre l'élément de vanne (34, 234) et le support de ressort (65, 265).

**3.** Vanne motorisée (1) selon la revendication 1 ou la revendication 2, dans laquelle le support de ressort (65, 265) est supporté de manière coulissante le long d'une surface interne de l'arbre (60) dans la direction axiale de celui-ci.

**4.** Vanne motorisée (1) selon l'une quelconque des revendications 1 à 3, dans laquelle l'élément de vanne (34, 234) comprend un corps (110) supporté de manière coulissante par l'arbre (60), une partie de formation de vanne (112) formée à une extrémité avant du corps (110) et configurée pour toucher et quitter le siège de vanne (26), et une butée (69) faisant saillie radialement à une extrémité de base du corps (110), la surface sphérique de l'élément de vanne (34, 234) étant formée sur un côté extrémité de base de la butée (69), dans laquelle l'arbre (60) comprend une partie de support (67) à travers laquelle le corps (110) de l'élément de vanne (34, 234) s'étend de manière coulissante, la partie de support (67) étant configurée pour arrêter la butée (69) dans la direction axiale à une surface d'extrémité de base de celle-ci pour empêcher l'élément de vanne (34, 234) de tomber, alors que la vanne est ouverte, une force de sollicitation du ressort (63) transmise par l'intermédiaire du support de ressort (65, 265) maintenant un état dans lequel la butée (69) est en contact avec la surface d'extrémité de base de la partie de support (67), et alors que la vanne est fermée, une force de réaction causée par l'élément de vanne (34, 234) touchant le siège de vanne (26) comprimant le ressort (63) par l'intermédiaire du support de ressort (65, 265), et la butée (69) s'éloignant de la surface d'extrémité de base de la partie de support (67).

**5.** Vanne motorisée (1) selon la revendication 4, dans laquelle une partie d'extrémité de l'élément de vanne (34, 234) a une forme avec une section transversale devenant plus petite vers l'extrémité de celle-ci, et la partie d'extrémité est introduite dans le trou de vanne (24, 224), de telle sorte que l'élément de vanne (34, 234) touche le siège de vanne (26).

**6.** Vanne motorisée (1) selon la revendication 4 ou la revendication 5, dans laquelle une partie, dans laquelle l'élément de vanne (34, 234) est introduit, de la partie de support (67) a une longueur (L) dans une direction axiale de celle-ci plus grande qu'un diamètre (d1) du corps (110) de l'élément de vanne (34, 234).

**7.** Vanne motorisée (1) selon l'une quelconque des revendications 1 à 6, dans laquelle le mécanisme de transformation de mouvement a un mécanisme de vis comprenant une partie filetage externe (66) intégrée à l'arbre (60) et une partie filetage interne (39) intégrée au corps (5), la partie filetage interne (39) venant en engagement avec la partie filetage externe (66).

FIG.1

FIG.2

EP 3 056 778 B1

FIG.3

FIG.4A

FIG.4B

FIG.4C

FIG.4D

FIG.4E

FIG.4F

FIG.4G

FIG.5

FIG.6

FIG.7A

FIG.7B

EP 3 056 778 B1

FIG.8

EP 3 056 778 B1

## FIG.9A

Legend: EARLY STAGE / 1,000 OPERATIONS / 100,000 OPERATIONS

OPENING AREA (vertical axis)

NUMBER OF DRIVE PULSES FROM ORIGIN

ORIGIN
(STOP POSITION
AT BOTTOM DEAD CENTER)

STOP POSITION
AT TOP DEAD CENTER

## FIG.9B

Legend: EARLY STAGE / 1,000 OPERATIONS / 15,000 OPERATIONS / 30,000 OPERATIONS / 45,000 OPERATIONS

OPENING AREA (vertical axis)

NUMBER OF DRIVE PULSES FROM ORIGIN

ORIGIN
(STOP POSITION
AT BOTTOM DEAD CENTER)

STOP POSITION
AT TOP DEAD CENTER

FIG.10A

FIG.10B

FIG.10C

FIG.10D

FIG.10E

FIG.10F

FIG.10G

FIG.11A        FIG.11B        FIG.11C

FIG.12A

FIG.12B

FIG.13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014196810 A

- EP 2211077 A